# EUROPEAN PATENT SPECIFICATION

(11) **EP 2 365 261 B1**
(45) Date of publication and mention of the grant of the patent: **11.12.2019**
(21) Application number: 11155108.1
(22) Date of filing: 18.02.2011
(51) Int. Cl.: F25B 45/00, B60H 1/00, F25B 43/00

(54) **Method and device for removing residual fluids present in at least one external service hose of a machine for recharging / recovering a refrigerant into / from a vehicle airconditioning system**
Verfahren und Vorrichtung zur Entfernung von Abwässern in mindestens einem externen Schlauch einer Maschine zum erneuten Laden/Wiederherstellen eines Kühlmittels in bzw. von einer Fahrzeugklimaanlage
Procédé et dispositif pour éliminer les fluides résiduels présents dans au moins le tuyau de service externe d'une machine pour le rechargement/récupération d'un réfrigérant vers/provenant d'un système de climatisation de véhicule

(30) Priority: 18.02.2010 IT TV20100017
(43) Date of publication of application: 14.09.2011
(73) Proprietor: Texa S.p.A., Monastier di Treviso (IT)
(72) Inventor: Vianello, Bruno, 31056, Roncade (IT)
(74) Representative: Bergadano, Mirko

(56) References cited:
- WO-A2-2012/059901
- US-A1- 2006 130 511
- US-A1- 2009 188 263

## Description

The present invention relates to a method and a device for removing residual fluids present in at least one external service hose of a machine for recharging/recovering a refrigerant into/from a vehicle air-conditioning system, such as for example a motor vehicle, to which the following description refers purely by way of example without this implying any loss of generality.

As is known, recharging/recovering machines for recharging/recovering refrigerants into/from vehicle air-conditioning systems are typically provided with two external flexible hoses, which can be coupled to corresponding terminals or connectors present in the air-conditioning system of the vehicle.

In detail, the service hoses communicate through respective connectors with a main hydraulic circuit present in the fluids recovery/recharging unit that is present in the machine and comprise: a first flexible service hose, which is structured so that it can be traversed by a high-pressure fluid, and is provided, on its own free end, with a connector designed to be coupled to a corresponding high-pressure connector of the vehicle system; and a second flexible service hose, which is structured to be traversed by a low-pressure fluid and is provided, on its own free end, with a connector which can be coupled to a corresponding low-pressure connector of the system itself.

The technical problem existing in the machines described above is represented by the fact that, at the end of each operation of recharging of the refrigerant into the vehicle system, a residual amount of lubricating oil remains present inside the service hose used during recharging and consequently, during subsequent recharging, can contaminate the vehicle systems, when the latter use lubricating oils of a type different from the one present in the service hose.

For this purpose methods have been devised, which, at the end of the recharging operation, remove the lubricating oil that has remained inside the service hoses of the machine.

In particular, the patent application US2009/0188263 discloses a method for clearing the residual lubricating oil from the service hoses of the machine, which envisages connecting together the two free ends of the first hose and of the second hose so as to connect them in series, through an additional auxiliary duct, in such a way as to form an external hydraulic branch that sets in communication the connectors of the main circuit with one another so as to form with the latter a closed hydraulic loop.

The method moreover envisages: injecting the refrigerant into the hydraulic branch in a first direction in such a way that the fluid itself flushes in sequence the first service hose and the second service hose; and then reversing the direction of injection of the refrigerant in such a way that the fluid itself flushes through in sequence the second service hose and the first service hose.

The alternated injection of the refrigerant in the two opposite directions through the closed hydraulic branch obtained from the connection in series of the two service hoses implemented through the aforesaid method entails the passage of the residual oil through both of the service hoses, disadvantageously causing a contamination thereof even when the residual lubricating oil, that is potentially contaminating, is present only in one service hose and is altogether absent in the other, i.e., even when one of the service hoses is clean.

In other words, the method described above, in addition to not enabling flushing of a single service hose to be carried out, necessarily causes contamination of a service hose that initially was without any trace of lubricating oil with the contaminating oil that may be present in the other service hose since the residual fluid contained in one service hose necessarily flows through the other service hose.

In addition, the need to supply the refrigerant into the external hydraulic branch in the two opposite directions, in addition to increasing the operative complexity of the machine, has a considerable adverse effect on the times required for completing removal of the lubricating oil from the service hoses.

The document No. US2006/0130511 describes, instead, an apparatus provided with: a refrigerant source; a refrigerant-recovery circuit configured for recovering refrigerant from a cooling circuit; and a flushing circuit, which is coupled to the refrigerant-recovery circuit and is configured for supplying refrigerant through the refrigerant-recovery circuit itself.

The aim of the present invention is consequently to provide a device and a method that, in addition to being simple and fast to implement, will be able to clear a residual fluid from an external high-pressure or low-pressure service hose without entailing contamination of the other service hose.

According to the present invention, a method for clearing a fluid from an external service hose of a machine for recharging/recovering a refrigerant into/from a vehicle air-conditioning system is provided according to what is specified in claim 1 and preferably, but not necessarily, in any one of the claims that depend either directly or indirectly upon claim 1. According to the present invention, a machine for recharging/recovering a refrigerant into/from a vehicle air-conditioning system equipped with a device for removing a residual fluid present in an external service hose of the machine itself is moreover provided according to what is specified in claim 5 and preferably, but not necessarily, in any one of the claims that depend either directly or indirectly upon claim 5.

The present invention will now be described with reference to the annexed drawings, which illustrate a non-limiting example of embodiment thereof and in which:
- Figure 1 is a schematic view in front elevation, with parts removed for clarity, of a refrigerant recharging/recovering machine provided with a device for removing a residual fluid from an external service hose, according to the present invention;
- Figure 2 is a schematic illustration of the main hydraulic circuit and of the refrigerant-recovery unit of the machine shown in Figure 1;
- Figure 3 is a flowchart regarding the operations implemented by the method provided by the present invention;
- Figure 4 shows an example of the connection of the two external service hoses to auxiliary connectors of the machine shown in Figure 1; and
- Figure 5 is a variant of the machine shown in Figure 1.

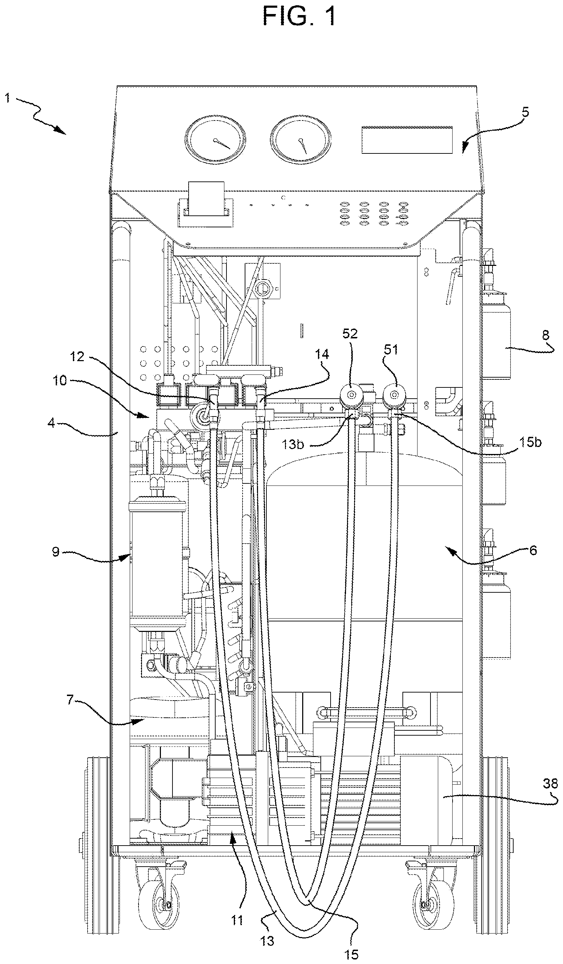

With reference to Figure 1, designated as a whole by 1 is a refrigerant recharging/recovering machine for recharging/recovering a refrigerant into/from an air-conditioning system of a vehicle, such as for example a land vehicle, in particular a motor vehicle (not illustrated).

In the example shown in Figure 1, the machine 1 comprises: a casing 4 provided with wheels resting on the ground to enable displacement of the machine 1; a user control interface 5, configured to enable a user to impart commands to the machine 1; and a tank 6 containing the refrigerant and a tank 7 recovering the lubricating oil, which are arranged preferably, but not necessarily, inside the casing 4.

The machine 1 further comprises a refrigerant-recovery unit 9, preferably arranged inside the casing 4 and having the function of filtering and separating the refrigerant recovered from the residual lubricating oil so as to store them in the refrigerant containing tank 6 and in the lubricating oil recovery tank 7, respectively.

The machine 1 further comprises: a main hydraulic circuit 10 designed to be connected to the vehicle air-conditioning system and co-operate with the refrigerant-recovery unit 9, with the refrigerant containing tank 6, with the oil recovery tank 7, and with a lubricating oil recharging vessel 8 so as to draw in/supply the refrigerant and the lubricating oil from/into the vehicle air-conditioning system; and a vacuum pump 11 connected to the main hydraulic circuit 10 so as to create, upon command, the negative pressures inside it.

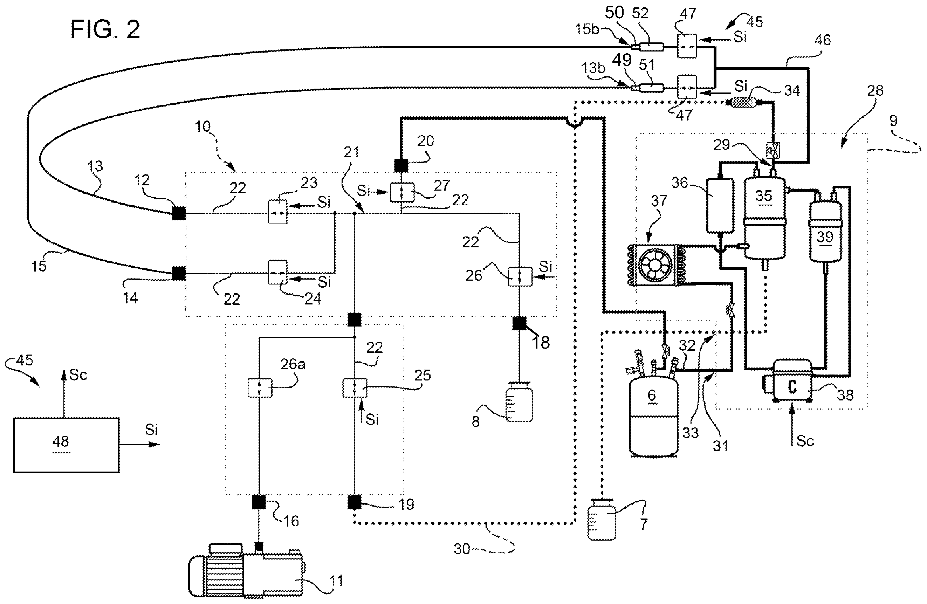

In the example shown in Figures 1 and 2, the main hydraulic circuit 10 comprises: a connector 12, which can be connected to a high-pressure terminal of the vehicle air-conditioning system (not illustrated) via a high-pressure external service hose 13, preferably made of flexible material; a connector 14, which can be connected to a low-pressure terminal of the vehicle air-conditioning system (not illustrated) via a low-pressure external service hose 15, preferably made of flexible material; a connector 16 connected to the vacuum pump 11; a connector 18, coupled to which is the vessel 8 for recharging the lubricating oil; a connector 19, connected to the refrigerant-recovery unit 9; and a connector 20, connected to an outlet of the refrigerant containing tank 6 in order to receive, upon command, the refrigerant therefrom.

It should be pointed out that hereinafter the term "high-pressure external service hose 13" will be used to indicate a service hose which is arranged on the outside of the machine 1 and is able to be manually connected to a terminal/connector of the high-pressure circuit of the vehicle air-conditioning system (which are not illustrated), whereas the term "low-pressure external service hose 13" will be used to indicate a service hose which is arranged on the outside of the machine 1 and is able to be manually connected to a terminal/connector of the low-pressure circuit of the vehicle air-conditioning system (which are not illustrated). Preferably, the low pressure is lower than approximately 5.10⁵ Pa, whilst the high pressure is higher than approximately 5.10⁵ Pa.

Referring to Figure 2, the main hydraulic circuit 10 further comprises a main pipe or manifold 21, which is connected to the connectors 12, 14, 16, 18, 19 and 20 through hydraulic stretches or branches 22, and a series of on-off valves, which are arranged along the hydraulic branches 22 between the connectors 12, 14, 18, 16, 19 and 20 and the main manifold 21, and which can be controlled selectively in opening/closing through respective electrical control signals Si so as to enable or alternatively prevent, upon command, passage of a fluid through the hydraulic branches 22 themselves.

Preferably, in the schematic example illustrated in Figure 2, the main hydraulic circuit 10 comprises: at least one on-off valve 23, arranged along the hydraulic branch 22 between the connector 12 and the main manifold 21; at least one on-off valve 24, arranged along the hydraulic branch 22 between the connector 14 and the main manifold 21; a on-off valve 25, arranged along the hydraulic branch 22 between the connector 19 and the main manifold 21; at least one on-off valve 26, arranged along the hydraulic branch 22 between the connector 18 and the main manifold 21; at least one on-off valve 27, arranged along the hydraulic branch 22 between the connector 20 and the main manifold 21; and a on-off valve 26a, arranged along the hydraulic branch 22 between the connector 16 and the main manifold 21.

As regards the refrigerant-recovery unit 9, it comprises a hydraulic recovery circuit 28 having an inlet terminal 29 connected to the connector 19 of the main hydraulic circuit 10 through a pipe 30 for receiving the refrigerant recovered from the vehicle system; an outlet 31 connected to an inlet of the refrigerant containing tank 6, through a pipe 32; and an outlet 33 connected to the lubricating oil recovery tank 7.

Preferably, in the example illustrated in Figure 2, the refrigerant-recovery unit 9 further comprises: a mechanical filter 34 arranged along the pipe 30 and having the function of filtering the impurities present in the refrigerant in the gaseous state received from the vehicle air-conditioning system; a distillator-separator apparatus 35 designed to separate the lubricating oil from the refrigerant; a first dehydration filter 36; a condenser apparatus 37; a compressor 38; and a second dehydration filter 39.

Preferably, the distillator-separator apparatus 35 comprises: a first terminal connected to the inlet terminal 29; a second terminal connected to a first terminal of the compressor 38 through the first separator filter 36; a third terminal connected to the second terminal of the compressor 38 through the second separator filter 39; a fourth terminal connected to the outlet 31 through the condenser apparatus 37; and a fifth terminal connected to the outlet 33.

The refrigerant-recovery unit 9 is of a known type and consequently will not be described further, except to point out that it is configured to cause, through the inlet terminal 29, the refrigerant in a gaseous state to be conveyed into the distillator/separator apparatus 35, which separates the refrigerant from the lubricating oil and supplies the separated refrigerant to the compressor 38 through the first separator filter 36. The compressor 38 compresses the refrigerant so as to raise the pressure and the temperature thereof and supplies it again through the second separator filter 39 to the distillator/separator apparatus 35, which in turn, following upon the process of condensation carried out via the condenser apparatus 37, feeds it to the refrigerant containing tank 6.

With reference to Figures 1 and 2, the machine 1 further comprises a device 45 designed to remove the residual fluid that has remained inside at least one of the service hoses 13 and 15.

Preferably, the device 45 basically comprises: at least one auxiliary external connector connected to the inlet terminal 29 of the refrigerant-recovery unit 9 through a pipe 46; and an electronic control unit 48, configured to drive the on-off valves 23-27 and the compressor 38 of the refrigerant-recovery unit 9 based on the operations comprised in the method described in detail hereinafter.

Preferably, but not necessarily, the device 45 further comprises at least one on-off valve 47, which is arranged along the pipe 46 and can be controlled selectively in opening/closing through an electrical control signal Si so as to enable or alternatively prevent, upon command, passage of a fluid through the pipe 46.

According to the example illustrated in Figures 1 and 2, the external auxiliary connector is structured so that it can be coupled to the free ends 13b and 15b of the external service hoses 13 and 15 of the machine 1.

For this purpose the free ends 13b and 15b of the service hoses 13 and 15 can be provided with corresponding connectors 49 and 50, respectively, each designed to be coupled in a stable, but easily removable, way to the external auxiliary connector.

In the example shown in Figures 1, 2, and 4 the device 45 of the machine 1 advantageously comprises two external auxiliary connectors 51 and 52, both of which communicate with the inlet terminal 29 of the recovery unit 9 through the pipe 46, and preferably, but not necessarily, two on-off valves 47 set in positions corresponding to the respective external auxiliary connectors 51 and 52.

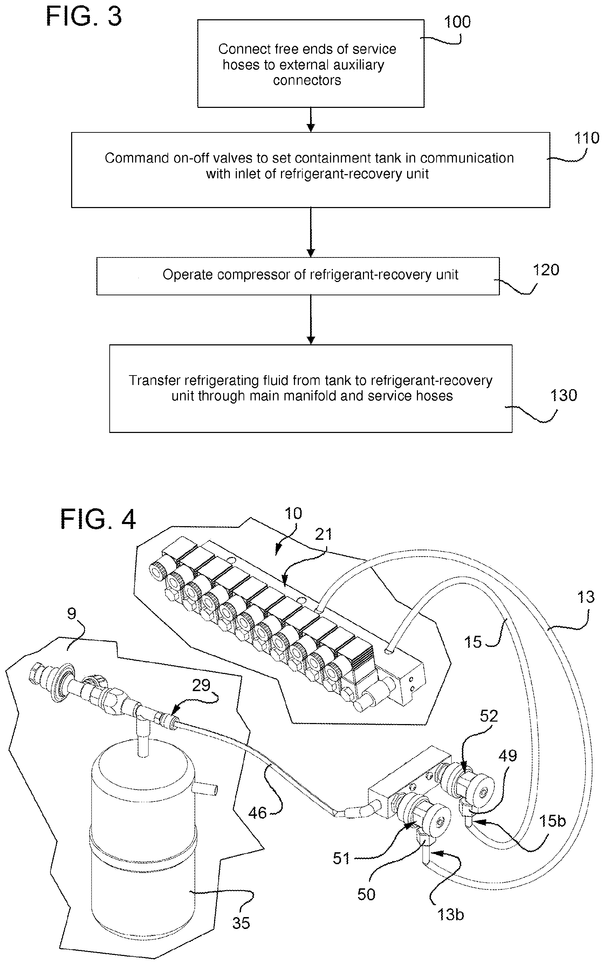

With reference to the flowchart shown in Figure 3, the operating steps of the method for clearing the residual fluid will be described hereinafter.

The method initially comprises making a connection of a service hose 13 or 15 to be flushed with the auxiliary connector.

In the following example it is assumed, without this implying any loss of generality, that the removal of the residual fluid has being carried out on both of the service hoses 13 and 15. The initial step of the method comprises connecting manually both of the free ends 13b and 15b of the service hoses 13 and 15 to the corresponding external connectors 51 and 52, respectively, of the device 45 (block 100).

Following upon this connection, the method provides for the electronic control unit 48: generating the control signals Si to close the on-off valves 25, 26 and 26a; opening the on-off valves 23, 24 and 27 and 47 (block 110); and finally generating the control signal Sc for turning-on of the compressor 38 (block 120).

Turning-on of the compressor 38 generates a negative difference of pressure between the inlet terminal 29 of the refrigerant-recovery unit 9 and the terminal of the refrigerant containing tank 6 connected to the connector 20.

Thanks to the presence of the pressure difference, the refrigerant is expelled from the refrigerant containing tank 6 in such a way as to enter the main manifold 21, be divided into two branches between the service hose 13 and the service hose 15, and, after traversing said hoses, be drawn into the refrigerant-recovery unit 9 (block 130).

During passage through the service hoses 13 and 15, the refrigerant, thanks to its own solvent power, removes and flushes any trace of residual fluid, and in particular of lubricating oil, that may be present inside the service hoses 13 and 15.

In particular, during passage through the service hoses 13 and 15 the refrigerant mixes with the residual lubricating oil thus clearing it out of the service hoses 13 and 15, and entrains it progressively towards the recovery unit 9.

The residual lubricating oil and the refrigerant drawn in by the recovery unit 9 are then separated and introduced into the respective tanks 6 and 7 through the operations of separation and filtering described above.

Suction of the refrigerant by the recovery unit 9 can be maintained for a pre-set interval in such a way as to ensure, on the one hand, complete flushing of the service hoses 13 and 15 and, on the other hand, completion of suction of the refrigerant present in the main hydraulic circuit 10.

Once the operation of flushing and recovery has been completed, i.e., at the end of the pre-set interval, the electronic control unit 48 of the device 45 closes the on-off valve 27 and after an additional time interval turns-off the compressor 38 and closes the on-off valves 23, 24 and 47.

From what has been described above it is evident that the operations listed above can be implemented also for carrying out removal of the residual fluid contained in just one service hose, for example the service hose 13, by coupling the second free end 13b directly to the external auxiliary connector 51, and operating the refrigerant-recovery unit 9 in such a way that the refrigerant contained in the tank 6 will reach the external auxiliary connector 51, and then the refrigerant-recovery unit 9, traversing sequentially and exclusively the main hydraulic circuit 10, in particular the main manifold 21, and the external service hose 13, and then entering directly the inlet terminal 29.

In other words, part of the refrigerant contained in the tank 6 traverses the main hydraulic circuit 10, and proceeds from the external connector 12 to the external auxiliary connector 51 traversing exclusively the external service hose 13 in such a way as to remove exclusively the residual fluid contained therein.

It is evident that the device 45 is extremely advantageous in so far as, unlike the devices according to the prior art, it: enables flushing of one of the two external service hoses, even in the absence of the other external service hose, or of supplementary service hoses/adapters designed to connect the service hoses in series with one another; prevents the service hose from being contaminated by residual fluids/oils contained in other hoses; prevents the residual fluid/oil contained in the service hose from contaminating other hoses; and enables the flushing to be carried out with a single operation of passage of the refrigerant in a single direction.

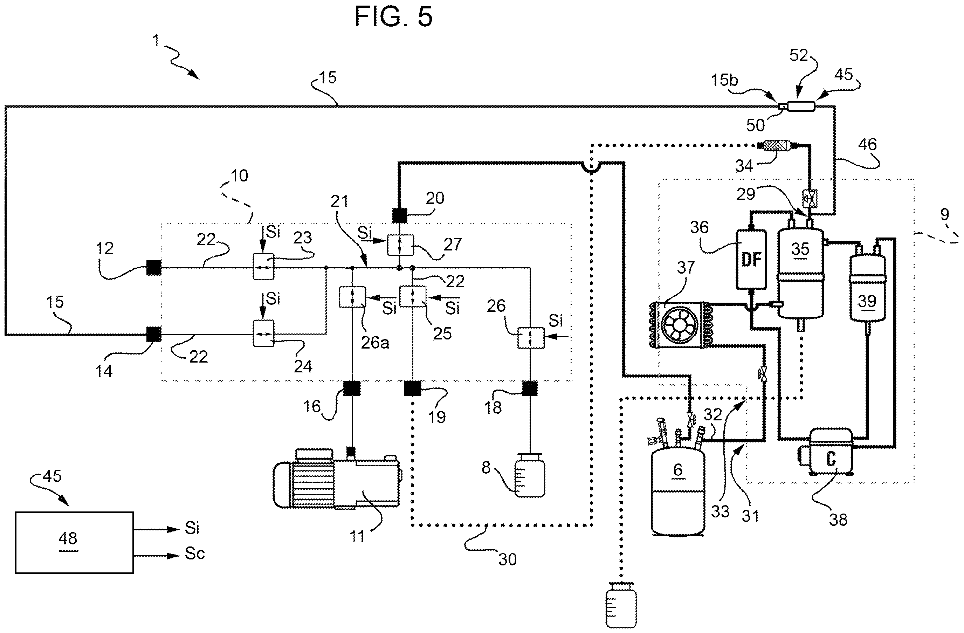

With reference to the variant shown schematically in Figure 5, the machine 1, instead of having two external auxiliary connectors, can be provided with a single external auxiliary connector to which the first service hose 13 and/or the second service hose 15 can be connected.

In this case, the service hose to be flushed is connected to the external auxiliary connector, and the electronic control unit 48 will implement the same control operations as the ones referred to above.

From what has been described above it should moreover be pointed out that the electronic control unit 48 can correspond to, or form part of, a supervision electronic control unit able to control all the functions implemented by the machine 1.

Finally, it should be pointed out that the electronic control unit 48 can be provided with a microprocessor and a memory containing a software program designed to be loaded into the microprocessor to enable the latter to generate the control signals Si/Sc so as to control the on-off valves, which in the examples illustrated are solenoid valves, and the refrigerant-recovery unit 9 according to the operating modes described above.

The advantages of the machine and of the method described above are evident: in the first place, clearing of the lubricating oil from the service hose is carried out in an extremely simple way, i.e., without requiring the addition in the machine of auxiliary electronic apparatuses, and/or external auxiliary ducts, or bypass adapters for connecting in series the two service hoses, consequently leading to an evident containment of costs. In fact, the solution described above, in addition to envisaging implementation of the control operations by a traditional supervision electronic control unit, simply requires connection of an external auxiliary connector to the inlet terminal of the refrigerant-recovery unit, traditionally present in the machine.

In addition, the method is extremely advantageous in so far as it does not require the use of additional detergent fluids, but exploits the solvent power of the refrigerant already present in the machine.

In the second place, the method is extremely practical to implement in so far as it requires the operator to connect simply one or both of the free ends of the service hoses to the external auxiliary connectors, and to cause the electronic control unit to execute the software program for removal of the residual fluid.

Furthermore, the method described above, in addition to advantageously enabling flushing selectively of just one or both of the service hoses, enables clearing of the lubricating oil from each hose without contaminating the other service hose.

In fact, during the removal step, the residual lubricating oil of each hose is entrained by the refrigerant directly to the recovery unit without passing through the other service hose.

Finally, the method is particularly fast in so far as it performs clearing of the residual fluid from the service hose/hoses causing the refrigerant to pass in just one direction, i.e., from the tank to the refrigerant-recovery unit, without requiring the opposite operation, i.e., passage of the refrigerant through the service hoses from the refrigeration unit to the tank.

Finally, it is clear that modifications and variations may be made to the method and the machine described and illustrated herein without thereby departing from the scope of the present invention, as defined by the annexed claims.

## Claims

1. A method for removing a residual fluid contained in at least one external service hose (13)(15) associated to a high-pressure or low-pressure fluid, which is designed to connect a refrigerant recharging/recovering machine (1) for recharging/recovering a refrigerant into/from an vehicle air-conditioning system;
said refrigerant recharging/recovering machine (1) comprising:
- a main hydraulic circuit (10) provided with at least one first external connector (12) (14), connected to which is a first end of said external service hose (13) (15); said external service hose (13) (15) having a second free end (13b) (15b) structured to be coupled in a stable, but easily removable, way to a connector of said vehicle air-conditioning system;
- refrigerant-recovery means (9), which comprise an inlet terminal (29) connected to said main hydraulic circuit (10) for receiving, through the latter, the refrigerant contained in the vehicle air-conditioning system, and are configured to filter the refrigerant from additional fluids to supply the filtered refrigerant itself to a tank (6); and
- at least one external auxiliary connector (51)(52), connected to said inlet terminal (29) of said refrigerant-recovery means (9) and structured to be coupled in a stable, but easily removable, way to said second free end (13b)(15b) of said external service hose (13)(15);
said method being **characterized in that** it comprises the following steps:
- manually coupling said second free end (13b) (15b) of said at least one service hose (13)(15) directly to the external auxiliary connector (51)(52); and
- operating said refrigerant-recovery means (9) to cause part of the refrigerant contained in said tank (6) to pass through the main hydraulic circuit (10) and to flow from said first external connector (12)(14) to said external auxiliary connector (51)(52) traversing exclusively said external service hose (13)(15) in such a way as to remove exclusively the residual fluid contained therein, so that the residual fluid of said external service hose (13)(15) is entrained by the refrigerant directly to said refrigerant-recovery means (9) without passing through the other service hose (15)(13).

2. The method according to Claim 1, wherein said refrigerant recharging/recovering machine (1) is configured to remove a residual fluid contained in a first service hose (13) associated to a high-pressure fluid and the residual fluid contained in a second service hose (15) associated to a low-pressure fluid; said first and second service hoses (13)(15) being designed to connect said refrigerant recharging/recovering machine (1) into/from said vehicle air-conditioning system;
- the first external connector (12) of said main hydraulic circuit (10) being connected to a first end of said first external service hose (13); the main hydraulic circuit (10) further comprising a second external connector (14) to which a first end of said second external service hose (15) is connected; said first and second service hoses (13)(15) having second free ends (13b) (15b) structured to be coupled to respective high-pressure and low-pressure connectors of said vehicle air-conditioning system; and
- two external auxiliary connectors (51)(52), both connected to said inlet terminal (29) of said refrigerant-recovery means (9); said external auxiliary connectors (51)(52) being structured to be coupled in a stable, but easily removable, way to the second free ends (13b)(15b) of said first and second external service hoses (13)(15);
said method comprising the steps of:
- manually coupling said second free ends (13b)(15b) of said first and second external service hoses (13)(15) to the respective external auxiliary connectors (51)(52); and
- operating said refrigerant-recovery means (9) to cause part of the refrigerant contained in the tank (6) to pass through the main hydraulic circuit (10) and be divided into two branches between the first service hose (13) and the second service hose (15), in such a way that the residual fluid contained in one service hose (13) (15) will be entrained into the corresponding external auxiliary connector (51)(52) without coming into contact with the other service hose (15)(13) and with the other external auxiliary connector (52)(51) in such a way as not to contaminate them.

3. The method according to Claim 1 or Claim 2, wherein:
- said main hydraulic circuit (10) comprises a main manifold (21); and
- said refrigerant-recovery means (9) comprise a compressor (38) ;
said machine (1) comprising:
- a first on-off valve (23)(24) set between said at least one first external connector (12)(14) and said main manifold (21); and
- a second on-off valve (27) set between said main manifold (21) and said tank (6);
said method comprising the steps of:
opening said first on-off valve (23)(24) and said second on-off valve (27); and
turning on said compressor (38) to generate a negative pressure in a region corresponding to said inlet terminal (29) of said refrigerant-recovery means (9) to cause the refrigerant to be expelled from said tank (6) and to pass sequentially through said main manifold (21) and exclusively through said external service hose (13)(15) to remove exclusively the residual fluid contained therein and feed it to said external auxiliary connector (51).

4. The method according to Claim 3, wherein:
- said main hydraulic circuit (10) comprises a first terminal (19) connected to said inlet terminal (29) of said refrigerant-recovery means (9) through a first internal pipe (30) to supply the refrigerant recovered from the vehicle system;
- said machine (1) comprising a third on-off valve (25) arranged between the first terminal (19) and said main manifold (21) ;
- said auxiliary connector (51)(52) being connected to said inlet terminal (29) through a second internal pipe (46);
said method comprising the steps of:
- closing the third on-off valve (25) to prevent transfer of fluid from the main manifold (21) to said refrigerant-recovery means (9) through said first internal pipe (30); and
- opening said first on-off valve (23) and said second on-off valve (27) in such a way that the refrigerant contained in the tank (6) is drawn in by the refrigerant-recovery means (9) through the main manifold, said external service hose (13)(15), the auxiliary connector (51)(52) and the second internal pipe (46) .

5. A refrigerant recharging/recovering machine (1) configured to recharge/recover a refrigerant into/from a vehicle air-conditioning system;
said machine (1) comprising:
- a main hydraulic circuit (10) provided with at least one first external connector (12)(14), connected to which is a first end of an external service hose (13)(15) associated to a high-pressure fluid or a low-pressure fluid; said external service hose (13)(15) having a second free end (13b)(15b) structured so as to be coupled in a stable, but easily removable, way to a connector of said vehicle air-conditioning system;
- refrigerant-recovery means (9), which have an inlet terminal (29) connected to said main hydraulic circuit (10) for receiving, through the latter, the refrigerant contained in the vehicle air-conditioning system, and are configured to filter the refrigerant from additional fluids so as to supply the filtered refrigerant itself to a tank (6); and
- a residual fluid removing device (45) configured to remove a residual fluid contained in said at least one external service hose (13)(15);
said machine (1) being **characterized in that** said residual fluid removing device (45) comprises:
- at least one external auxiliary connector (51)(52) connected to said inlet terminal (29) of said refrigerant-recovery means (9) and structured so that it can be coupled in a stable, but easily removable, way to said second free end (13b)(15b) of said external service hose (13)(15); and
- electronic control means (48) configured to control said refrigerant-recovery means (9) to cause, when said second free end (13b)(15b) of said external service hose (13)(15) is connected to said external auxiliary connector (51)(52), part of the refrigerant contained in said tank (6) to pass through the main hydraulic circuit (10), and to flow from said first external connector (12)(14) to said external auxiliary connector (51)(52) traversing exclusively said external service hose (13)(15) in such a way as to remove exclusively the residual fluid contained therein, **characterized in that** the residual fluid of said external service hose (13)(15) is entrained by the refrigerant directly to said refrigerant-recovery means (9) without passing through the other service hose (15)(13).

6. The machine according to Claim 5, comprising a first service hose (13) associated to a high-pressure fluid and a second service hose (15) associated to a low-pressure fluid; said first and second service hoses (13)(15) being designed to connect said refrigerant recharging/recovering machine (1) with said vehicle air-conditioning system;
- the first external connector (12) of said main hydraulic circuit (10) being connected to a first end of said first external service hose (13); the main hydraulic circuit (10) further comprising a second external connector (14), connected to which is a first end of said second external service hose (15); said first (13) and second service hoses (13) (15) having second free ends (13b) (15b) structured to be coupled to respective high-pressure and low-pressure connectors of said vehicle air-conditioning system;
said residual fluid removing device device (45) comprising:
- two external auxiliary connectors (51)(52), both connected to said inlet terminal (29) of said refrigerant-recovery means (9); said external auxiliary connectors (51)(52) being structured so as to be coupled in a stable, but easily removable, way to the second free ends (13b)(15b) of said first and second external service hoses (13)(15); and
- said electronic control means (48) being configured to control said refrigerant-recovery means (9) to cause, when said second free ends (13b)(15b) of said first and second external service hoses (13)(15) are coupled to the respective external auxiliary connectors (51)(52), part of the refrigerant contained in the tank (6) to pass through the main hydraulic circuit (10) and be divided into two branches between the first service hose (13) and the second service hose (15) in such a way that the residual fluid contained in one service hose (13) (15) will be entrained towards the corresponding external auxiliary connector (51)(52) without coming into contact with the other service hose (15)(13) and with the other external auxiliary connector (52)(51) in such a way as not to contaminate them.

7. The machine according to Claim 5 or Claim 6, wherein:
- said main hydraulic circuit (10) comprises a main manifold (21); and
- said refrigerant-recovery means (9) comprise a compressor (38) ;
said machine (1) comprising:
- a first on-off valve (23) (24) arranged between said at least one first external connector (12)(14) and said main manifold (21); and
- a second on-off valve (27) arranged between said main manifold (21) and said tank (6);
said electronic control means (48) being configured to:
- open said first on-off valve (23)(24) and said second on-off valve (27); and
- turn on said compressor (38) to generate a negative pressure in a region corresponding to said inlet terminal (29) of said refrigerant-recovery means (9) to cause the refrigerant to be expelled from said tank (6) and to pass sequentially through said main manifold (21) and exclusively through said external service hose (13)(15) in such a way as to remove exclusively the residual fluid contained therein and feed it to said external auxiliary connector (51).

8. The machine according to Claim 7, wherein:
- said main hydraulic circuit (10) comprises a first terminal (19) connected to said inlet terminal (29) of said refrigerant-recovery means (9) through a first internal pipe (30) to supply the refrigerant recovered from the vehicle system;
- said machine (1) comprising a third on-off valve (25) arranged between the first terminal (19) and said main manifold (21); and
- said auxiliary connector (51)(52) being connected to said inlet terminal (29) through a second internal pipe (46);
said electronic control means (48) being configured to:
- close the third on-off valve (25) in such to prevent transfer of fluid from the main manifold (21) to said refrigerant-recovery means (9) through said first internal pipe (30); and
- open said first on-off valve (23) and said second on-off valve (27) in such a way that the refrigerant contained in the tank (6) will be drawn in by the refrigerant-recovery means (9) through the main manifold, said external service hose (13)(15), the auxiliary connector (51) (52), and the second internal pipe (46).

## Patentansprüche

1. Verfahren zum Entfernen eines Restfluids, das in zumindest einem externen Serviceschlauch (13) (15) enthalten ist, der einem Hochdruck- oder Niederdruckfluid zugeordnet ist, der dazu ausgelegt ist, eine Kältemittelnachfüll-/Rückgewinnungsmaschine (1) zum Nachfüllen/Rückgewinnen eines Kältemittels in/aus einer Fahrzeugklimaanlage zu verbinden;
wobei die Kältemittelnachfüll-/Rückgewinnungsmaschine (1) umfasst:
- einen Haupthydraulikkreis (10), der mit zumindest einem ersten externen Verbinder (12) (14) versehen ist, mit dem ein erstes Ende des externen Serviceschlauchs (13) (15) verbunden ist; wobei der externe Serviceschlauch (13) (15) ein zweites freies Ende (13b) (15b) aufweist, das so strukturiert ist, dass es auf stabile, aber leicht entfernbare Weise mit einem Verbinder der Fahrzeugklimaanlage gekoppelt werden kann bzw. ist;
- Kältemittelrückgewinnungsmittel (9), die einen Einlassanschluss (29) umfassen, der mit dem Haupthydraulikkreis (10) verbunden ist, um über diesen das in der Fahrzeugklimaanlage enthaltene Kältemittel aufzunehmen, und dazu konfiguriert sind, das Kältemittel aus zusätzlichen Fluids zu filtern, um das gefilterte Kältemittel selbst einem Tank (6) zuzuführen; und
- zumindest einen externen Hilfsverbinder (51) (52), der mit dem Einlassanschluss (29) der Kältemittelrückgewinnungsmittel (9) verbunden und so strukturiert ist, dass er auf stabile, aber leicht entfernbare Weise mit dem zweiten freien Ende (13b) (15b) des externen Serviceschlauchs (13) (15) gekoppelt werden kann bzw. ist;
wobei das Verfahren **dadurch gekennzeichnet ist, dass** es die folgenden Schritte umfasst:
- manuelles Koppeln des zweiten freien Endes (13b) (15b) des zumindest einen Serviceschlauchs (13) (15) direkt mit dem externen Hilfsverbinder (51) (52); und
- Betreiben der Kältemittelrückgewinnungsmittel (9) dahingehend, um zu bewirken, dass ein Teil des in dem Tank (6) enthaltenen Kältemittels durch den Haupthydraulikkreis (10) tritt und von dem ersten externen Verbinder (12) (14) zu dem externen Hilfsverbinder (51) (52) fließt, wobei es ausschließlich den externen Serviceschlauch (13) (15) durchquert, so dass ausschließlich das darin enthaltene restliche Fluid entfernt wird, so dass das Restfluid des externen Serviceschlauchs (13) (15) von dem Kältemittel direkt zu den Kältemittelrückgewinnungsmitteln (9) mitgerissen wird, ohne durch den anderen Serviceschlauch (15) (13) zu treten.

2. Verfahren nach Anspruch 1, wobei die Kältemittelnachfüll-/Rückgewinnungsmaschine (1) konfiguriert ist, ein Restfluid, das in einem ersten Serviceschlauch (13) enthalten ist, der einem Hochdruckfluid zugeordnet ist, und das Restfluid, das in einem zweiten Serviceschlauch (15) enthalten ist, der einem Niederdruckfluid zugeordnet ist, zu entfernen; wobei der erste und der zweite Serviceschlauch (13) (15) dazu ausgelegt sind, die Kältemittelnachfüll-/Rückgewinnungsmaschine (1) in die/aus der Fahrzeugklimaanlage zu verbinden bzw. mit der Fahrzeugklimaanlage zu verbinden bzw. von dieser zu entfernen;
- der erste externe Verbinder (12) des Haupthydraulikkreises (10) mit einem ersten Ende des ersten externen Serviceschlauchs (13) verbunden ist; wobei der Haupthydraulikkreis (10) ferner einen zweiten externen Verbinder (14) umfasst, mit dem ein erstes Ende des zweiten externen Serviceschlauchs (15) verbunden ist; wobei der erste und der zweite Serviceschlauch (13) (15) zweite freie Enden (13b) (15b) aufweisen, die so strukturiert sind, dass sie mit jeweiligen Hochdruck- und Niederdruckverbindern der Fahrzeugklimaanlage gekoppelt werden können bzw. sind; und
- zwei externe Hilfsanschlüsse (51) (52), die beide mit dem Einlassanschluss (29) der Kältemittelrückgewinnungsmittel (9) verbunden sind; wobei die externen Hilfsverbinder (51) (52) so strukturiert sind, dass sie auf stabile, aber leicht entfernbare Weise mit den zweiten freien Enden (13b) (15b) des ersten und des zweiten externen Serviceschlauchs (13) (15) gekoppelt werden können bzw. sind;
wobei das Verfahren die Schritte umfasst:
- manuelles Koppeln der zweiten freien Enden (13b) (15b) des ersten und des zweiten externen Serviceschlauchs (13) (15) mit den jeweiligen externen Hilfsverbindern (51) (52); und
- Betreiben der Kältemittelrückgewinnungseinrichtung (9) dahingehend, um zu bewirken, dass ein Teil des in dem Tank (6) enthaltenen Kältemittels durch den Haupthydraulikkreis (10) tritt und in zwei Zweige zwischen dem ersten Serviceschlauch (13) und dem zweiten Serviceschlauch (15) geteilt wird, so dass das in einem Serviceschlauch (13) (15) enthaltene Restfluid in den entsprechenden externen Hilfsverbinder (51) (52) mitgerissen wird, ohne mit dem anderen Serviceschlauch (15) (13) und mit dem anderen externen Hilfsverbinder (52) (51) in Kontakt zu kommen, und zwar so, dass sie nicht verunreinigt werden.

3. Verfahren nach Anspruch 1 oder 2, wobei:
- der Haupthydraulikkreis (10) einen Hauptverteiler (21) umfasst; und
- die Kältemittelrückgewinnungsmittel (9) einen Kompressor (38) umfassen; wobei die Maschine (1) umfasst:
- ein erstes Ein-Aus-Ventil (23) (24), das zwischen dem zumindest einen ersten externen Verbinder (12) (14) und dem Hauptverteiler (21) festgelegt bzw. angeordnet ist; und
- ein zweites Ein-Aus-Ventil (27), das zwischen dem Hauptverteiler (21) und dem Tank (6) festgelegt bzw. angeordnet ist;
wobei das Verfahren die Schritte umfasst:
Öffnen des ersten Ein-Aus-Ventils (23) (24) und des zweiten Ein-Aus-Ventils (27); und
Einschalten des Kompressors (38), um einen Unterdruck in einem Bereich zu erzeugen, der dem Einlassanschluss (29) der Kältemittelrückgewinnungsmittel (9) entspricht, um zu bewirken, dass das Kältemittel aus dem Tank (6) ausgestoßen wird und sequentiell durch den Hauptverteiler (21) und ausschließlich durch den externen Serviceschlauch (13) (15) tritt, um ausschließlich das darin enthaltene Restfluid zu entfernen und es dem externen Hilfsverbinder (51) zuzuführen.

4. Verfahren nach Anspruch 3, wobei:
- der Haupthydraulikkreis (10) einen ersten Anschluss (19) umfasst, der mit dem Einlassanschluss (29) der Kältemittelrückgewinnungsmittel (9) über ein erstes Innenrohr (30) verbunden ist, um das aus dem Fahrzeugsystem zurückgewonnene Kältemittel zuzuführen;
- wobei die Maschine (1) ein drittes Ein-Aus-Ventil (25) umfasst, das zwischen dem ersten Anschluss (19) und dem Hauptverteiler (21) angeordnet ist;
- der Hilfsverbinder (51) (52) über ein zweites Innenrohr (46) mit dem Einlassanschluss (29) verbunden ist;
wobei das Verfahren die Schritte umfasst:
- Schließen des dritten Ein-Aus-Ventils (25), um eine Übertragung von Fluid von dem Hauptverteiler (21) zu den Kältemittelrückgewinnungsmitteln (9) über das erste Innenrohr (30) zu verhindern; und
- Öffnen des ersten Ein-Aus-Ventils (23) und des zweiten Ein-Aus-Ventils (27) derart, dass das in dem Tank (6) enthaltene Kältemittel von den Kältemittelrückgewinnungsmittel (9) durch den Hauptverteiler, den externen Serviceschlauch (13) (15), den Hilfsanschluss (51) (52) und das zweite Innenrohr (46) angesaugt wird.

5. Kältemittelnachfüll-/Rückgewinnungsmaschine (1), die konfiguriert ist, ein Kältemittel in eine/aus einer Fahrzeugklimaanlage nachzufüllen/rückzugewinnen eines Kältemittels;
wobei die Maschine (1) umfasst:
- einen Haupthydraulikkreis (10), der mit zumindest einem ersten externen Verbinder (12) (14) versehen ist, mit dem ein erstes Ende eines externen Serviceschlauchs (13) (15) verbunden ist, der einem Hochdruck- oder Niederdruckfluid zugeordnet ist; wobei der externe Serviceschlauch (13) (15) ein zweites freies Ende (13b) (15b) aufweist, das so strukturiert ist, dass es auf stabile, aber leicht entfernbare Weise mit einem Verbinder der Fahrzeugklimaanlage gekoppelt werden kann bzw. ist;
- Kältemittelrückgewinnungsmittel (9), die einen Einlassanschluss (29) aufweisen, der mit dem Haupthydraulikkreis (10) verbunden ist, um über diesen das in der Fahrzeugklimaanlage enthaltene Kältemittel aufzunehmen, und dazu konfiguriert sind, das Kältemittel aus zusätzlichen Fluids zu filtern, um das gefilterte Kältemittel selbst einem Tank (6) zuzuführen; und
- eine Restfluidentfernungsvorrichtung (45), die konfiguriert ist, ein Restfluid zu entfernen, das in dem zumindest einen externen Serviceschlauch (13) (15) enthalten ist;
wobei die Maschine (1) **dadurch gekennzeichnet ist, dass** die Restfluidentfernungsvorrichtung (45) umfasst:
- zumindest einen externen Hilfsverbinder (51) (52), der mit dem Einlassanschluss (29) der Kältemittelrückgewinnungsmittel (9) verbunden und so strukturiert ist, dass er auf stabile, aber leicht entfernbare Weise mit dem zweiten freien Ende (13b) (15b) des externen Serviceschlauchs (13) (15) gekoppelt werden kann bzw. ist;
- elektronische Steuer- bzw. Regelmittel (48), die konfiguriert sind, die Kältemittelrückgewinnungsmittel (9) dahingehend zu steuern bzw. zu regeln, dass, wenn das zweite freie Ende (13b) (15b) des externen Serviceschlauchs (13) (15) mit dem externen Hilfsverbinder (51) (52) gekoppelt wird bzw. ist, sie bewirken, dass ein Teil des in dem Tank (6) enthaltenen Kältemittels durch den Haupthydraulikkreis (10) tritt und von dem ersten externen Verbinder (12) (14) zu dem externen Hilfsverbinder (51) (52) fließt, wobei es ausschließlich den externen Serviceschlauch (13) (15) durchquert, so dass ausschließlich das darin enthaltene restliche Fluid entfernt wird, **dadurch gekennzeichnet, dass** das Restfluid des externen Serviceschlauchs (13) (15) von dem Kältemittel direkt zu den Kältemittelrückgewinnungsmitteln (9) mitgerissen wird, ohne durch den anderen Serviceschlauch (15) (13) zu treten.

6. Maschine nach Anspruch 5, umfassend einen ersten Serviceschlauch (13), der einem Hochdruckfluid zugeordnet ist, und einen zweiten Serviceschlauch (15), der einem Niederdruckfluid zugeordnet ist; wobei der erste und der zweite Serviceschlauch (13) (15) so ausgelegt sind, dass sie die Kältemittelnachfüll-/Rückgewinnungsmaschine (1) mit der Fahrzeugklimaanlage verbinden;
- der erste externe Verbinder (12) des Haupthydraulikkreises (10) mit einem ersten Ende des ersten externen Serviceschlauchs (13) verbunden ist; wobei der Haupthydraulikkreis (10) ferner einen zweiten externen Verbinder (14) umfasst, mit dem ein erstes Ende des zweiten externen Serviceschlauchs (15) verbunden ist; wobei der erste (13) und der zweite Serviceschlauch (13) (15) zweite freie Enden (13b) (15b) aufweisen, die so strukturiert sind, dass sie mit jeweiligen Hochdruck- und Niederdruckverbindern der Fahrzeugklimaanlage gekoppelt werden können bzw. sind; und
- zwei externe Hilfsanschlüsse (51) (52), die beide mit dem Einlassanschluss (29) der Kältemittelrückgewinnungsmittel (9) verbunden sind; wobei die externen Hilfsverbinder (51) (52) so strukturiert sind, dass sie auf stabile, aber leicht entfernbare Weise mit den zweiten freien Enden (13b) (15b) des ersten und des zweiten externen Serviceschlauchs (13) (15) gekoppelt werden können bzw. sind;
- wobei die elektronischen Steuer- bzw. Regelmittel (48) konfiguriert sind, die Kältemittelrückgewinnungsmittel (9) dahingehend zu steuern bzw. zu regeln, dass, wenn die zweiten freien Enden (13b) (15b) des ersten und des zweiten externen Serviceschlauchs (13) (15) mit den jeweiligen externen Hilfsverbindern (51) (52) gekoppelt wird bzw. ist, sie bewirken, dass ein Teil des in dem Tank (6) enthaltenen Kältemittels durch den Haupthydraulikkreis (10) tritt und in zwei Zweige zwischen dem ersten Serviceschlauch (13) und dem zweiten Serviceschlauch (15) geteilt wird, so dass das in einem Serviceschlauch (13) (15) enthaltene Restfluid zu dem entsprechenden externen Hilfsverbinder (51) (52) mitgerissen wird, ohne mit dem anderen Serviceschlauch (15) (13) und mit dem anderen externen Hilfsverbinder (52) (51) in Kontakt zu kommen, und zwar so, dass sie nicht verunreinigt werden.

7. Maschine nach Anspruch 5 oder 6, wobei:
- der Haupthydraulikkreis (10) einen Hauptverteiler (21) umfasst; und
- die Kältemittelrückgewinnungsmittel (9) einen Kompressor (38) umfassen; wobei die Maschine (1) umfasst:
- ein erstes Ein-Aus-Ventil (23) (24), das zwischen dem zumindest einen ersten externen Verbinder (12) (14) und dem Hauptverteiler (21) angeordnet ist; und
- ein zweites Ein-Aus-Ventil (27), das zwischen dem Hauptverteiler (21) und dem Tank (6) angeordnet ist;
wobei die elektronischen Steuer- bzw. Regelmittel (48) konfiguriert sind zum:
- Öffnen des ersten Ein-Aus-Ventils (23) (24) und des zweiten Ein-Aus-Ventils (27); und
- Einschalten des Kompressors (38), um einen Unterdruck in einem Bereich zu erzeugen, der dem Einlassanschluss (29) der Kältemittelrückgewinnungsmittel (9) entspricht, um zu bewirken, dass das Kältemittel aus dem Tank (6) ausgestoßen wird und sequentiell durch den Hauptverteiler (21) und ausschließlich durch den externen Serviceschlauch (13) (15) tritt, um ausschließlich das darin enthaltene Restfluid zu entfernen und es dem externen Hilfsverbinder (51) zuzuführen.

8. Maschine nach Anspruch 7, wobei:
- der Haupthydraulikkreis (10) einen ersten Anschluss (19) umfasst, der mit dem Einlassanschluss (29) der Kältemittelrückgewinnungsmittel (9) über ein erstes Innenrohr (30) verbunden ist, um das aus dem Fahrzeugsystem zurückgewonnene Kältemittel zuzuführen;
- wobei die Maschine (1) ein drittes Ein-Aus-Ventil (25) umfasst, das zwischen dem ersten Anschluss (19) und dem Hauptverteiler (21) angeordnet ist;
- der Hilfsverbinder (51) (52) über ein zweites Innenrohr (46) mit dem Einlassanschluss (29) verbunden ist;
wobei die elektronischen Steuer- bzw. Regelmittel (48) konfiguriert sind zum:
- Schließen des dritten Ein-Aus-Ventils (25), um eine Übertragung von Fluid von dem Hauptverteiler (21) zu den Kältemittelrückgewinnungsmitteln (9) über das erste Innenrohr (30) zu verhindern; und
- Öffnen des ersten Ein-Aus-Ventils (23) und des zweiten Ein-Aus-Ventils (27) derart, dass das in dem Tank (6) enthaltene Kältemittel von den Kältemittelrückgewinnungsmittel (9) durch den Hauptverteiler, den externen Serviceschlauch (13) (15), den Hilfsanschluss (51) (52) und das zweite Innenrohr (46) angesaugt wird.

## Revendications

1. Procédé d'élimination d'un fluide résiduel contenu dans au moins un tuyau de service externe (13)(15) associé à un fluide haute pression ou basse pression, qui est conçu pour relier une machine de recharge/récupération de réfrigérant (1) pour recharger/récupérer un réfrigérant dans/depuis un système de climatisation de véhicule ;
ladite machine de recharge/récupération de réfrigérant (1) comprenant :
- un circuit hydraulique principal (10) muni d'au moins un premier connecteur externe (12)(14), auquel est reliée une première extrémité dudit tuyau de service externe (13)(15) ; ledit tuyau de service externe (13)(15) ayant une deuxième extrémité libre (13b)(15b) structurée pour être couplée de manière stable, mais facilement amovible à un connecteur dudit système de climatisation de véhicule ;
- des moyens de récupération de réfrigérant (9), qui comprennent une borne d'entrée (29) reliée audit circuit hydraulique principal (10) pour recevoir, par cette dernière, le réfrigérant contenu dans le système de climatisation de véhicule, et qui sont configurés pour filtrer le réfrigérant de fluides supplémentaires pour alimenter un réservoir (6) avec le réfrigérant filtré lui-même ; et
- au moins un connecteur auxiliaire externe (51)(52), relié à ladite borne d'entrée (29) desdits moyens de récupération de réfrigérant (9) et structuré pour être couplé de manière stable, mais facilement amovible à ladite deuxième extrémité libre (13b)(15b) dudit tuyau de service externe (13)(15) ;
ledit procédé étant **caractérisé en ce qu'**il comprend les étapes suivantes :
- coupler manuellement ladite deuxième extrémité libre (13b)(15b) dudit au moins un tuyau de service (13)(15) directement au connecteur auxiliaire externe (51)(52) ; et
- faire fonctionner lesdits moyens de récupération de réfrigérant (9) pour amener une partie du réfrigérant contenu dans ledit réservoir (6) à passer à travers le circuit hydraulique principal (10) et à s'écouler dudit premier connecteur externe (12)(14) audit connecteur auxiliaire externe (51)(52) en traversant exclusivement ledit tuyau de service externe (13)(15) de manière à éliminer exclusivement le fluide résiduel contenu dans celui-ci, de sorte que le fluide résiduel dudit tuyau de service externe (13)(15) soit entraîné par le réfrigérant directement vers lesdits moyens de récupération de réfrigérant (9) sans passer à travers l'autre tuyau de service (15)(13).

2. Procédé selon la revendication 1, dans lequel ladite machine de recharge/récupération de réfrigérant (1) est configurée pour éliminer un fluide résiduel contenu dans un premier tuyau de service (13) associé à un fluide haute pression et le fluide résiduel contenu dans un deuxième tuyau de service (15) associé à un fluide basse pression ; lesdits premier et deuxième tuyaux de service (13)(15) étant conçus pour relier ladite machine de recharge/récupération de réfrigérant (1) dans/depuis ledit système de climatisation de véhicule ;
- le premier connecteur externe (12) dudit circuit hydraulique principal (10) étant relié à une première extrémité dudit premier tuyau de service externe (13) ; le circuit hydraulique principal (10) comprenant en outre un deuxième connecteur externe (14) auquel une première extrémité dudit deuxième tuyau de service externe (15) est reliée ; lesdits premier et deuxième tuyaux de service (13)(15) ayant des deuxièmes extrémités libres (13b) (15b) structurées pour être couplées à des connecteurs haute pression et basse pression respectifs dudit système de climatisation de véhicule ; et
deux connecteurs auxiliaires externes (51)(52), reliés tous deux à ladite borne d'entrée (29) desdits moyens de récupération de réfrigérant (9) ; lesdits connecteurs auxiliaires externes (51)(52) étant structurés pour être couplés de manière stable, mais facilement amovible aux deuxièmes extrémités libres (13b)(15b) desdits premier et deuxième tuyaux de service externes (13)(15) ;
ledit procédé comprenant les étapes consistant à :
- coupler manuellement lesdites deuxièmes extrémités libres (13b)(15b) desdits premier et deuxième tuyaux de service externes (13)(15) aux connecteurs auxiliaires externes respectifs (51)(52) ; et
- faire fonctionner lesdits moyens de récupération de réfrigérant (9) pour amener une partie du réfrigérant contenu dans le réservoir (6) à passer à travers le circuit hydraulique principal (10) et à être divisée en deux branches entre le premier tuyau de service (13) et le deuxième tuyau de service (15), d'une manière telle que le fluide résiduel contenu dans un tuyau de service (13) (15) se trouve entraîné dans le connecteur auxiliaire externe correspondant (51)(52) sans entrer en contact avec l'autre tuyau de service (15)(13) et avec l'autre connecteur auxiliaire externe (52)(51) de manière à ne pas les contaminer.

3. Procédé selon la revendication 1 ou la revendication 2, dans lequel :
- ledit circuit hydraulique principal (10) comprend un collecteur principal (21) ; et
- lesdits moyens de récupération de réfrigérant (9) comprennent un compresseur (38) ;
ladite machine (1) comprenant :
- une première vanne tout ou rien (23)(24) réglée entre ledit au moins un premier connecteur externe (12)(14) et ledit collecteur principal (21) ; et
- une deuxième vanne tout ou rien (27) réglée entre ledit collecteur principal (21) et ledit réservoir (6) ;
ledit procédé comprenant les étapes consistant à :
ouvrir ladite première vanne tout ou rien (23)(24) et ladite deuxième vanne tout ou rien (27) ; et
mettre en marche ledit compresseur (38) pour générer une pression négative dans une région correspondant à ladite borne d'entrée (29) desdits moyens de récupération de réfrigérant (9) pour amener le réfrigérant à être expulsé dudit réservoir (6) et pour passer séquentiellement à travers ledit collecteur principal (21) et exclusivement à travers ledit tuyau de service externe (13)(15) pour éliminer exclusivement le fluide résiduel contenu dans celui-ci et alimenter ledit connecteur auxiliaire externe par celui-ci (51).

4. Procédé selon la revendication 3, dans lequel :
- ledit circuit hydraulique principal (10) comprend une première borne (19) relié à ladite borne d'entrée (29) desdits moyens de récupération de réfrigérant (9) à travers une première conduite interne (30) pour alimenter le réfrigérant récupéré à partir du système de véhicule ;
- ladite machine (1) comprenant une troisième vanne tout ou rien (25) agencée entre la première borne (19) et ledit collecteur principal (21) ;
- ledit connecteur auxiliaire (51)(52) étant relié à ladite borne d'entrée (29) à travers une deuxième conduite interne (46) ;
ledit procédé comprenant les étapes consistant à :
- fermer la troisième vanne tout ou rien (25) pour empêcher le transfert de fluide du collecteur principal (21) vers lesdits moyens de récupération de réfrigérant (9) à travers ladite première conduite interne (30) ; et
- ouvrir ladite première vanne tout ou rien (23) et ladite deuxième vanne tout ou rien (27) de telle sorte que le réfrigérant contenu dans le réservoir (6) soit aspiré par les moyens de récupération de réfrigérant (9) à travers le collecteur principal, ledit tuyau de service externe (13)(15), le connecteur auxiliaire (51)(52) et le deuxième conduite interne (46).

5. Machine de recharge/récupération de réfrigérant (1) configurée pour recharger/récupérer un réfrigérant dans/depuis un système de climatisation de véhicule ;
ladite machine (1) comprenant :
- un circuit hydraulique principal (10) muni d'au moins un premier connecteur externe (12)(14), auquel est reliée une première extrémité d'un tuyau de service externe (13)(15) associé à un fluide haute pression ou un fluide basse pression ; ledit tuyau de service externe (13)(15) ayant une deuxième extrémité libre (13b)(15b) structurée de manière à être couplée de manière stable, mais facilement amovible à un connecteur dudit système de climatisation de véhicule ;
- des moyens de récupération de réfrigérant (9), qui ont une borne d'entrée (29) reliée audit circuit hydraulique principal (10) pour recevoir, par ce dernier, le réfrigérant contenu dans le système de climatisation de véhicule, et qui sont configurés pour filtrer le réfrigérant de fluides supplémentaires de sorte à alimenter un réservoir (6) avec le réfrigérant filtré lui-même ; et
- un dispositif d'élimination de fluide résiduel (45) configuré pour éliminer un fluide résiduel contenu dans ledit au moins un tuyau de service externe (13)(15) ;
ladite machine (1) étant **caractérisée en ce que** ledit dispositif d'élimination de fluide résiduel (45) comprend :
- au moins un connecteur auxiliaire externe (51)(52) relié à ladite borne d'entrée (29) desdits moyens de récupération de réfrigérant (9) et structuré de sorte qu'il puisse être couplé de manière stable, mais facilement amovible à ladite deuxième extrémité libre (13b)(15b) dudit tuyau de service externe (13)(15) ; et
- des moyens de commande électroniques (48) configurés pour commander lesdits moyens de récupération de réfrigérant (9) pour amener, lorsque ladite deuxième extrémité libre (13b) (15b) dudit tuyau de service externe (13)(15) est reliée audit connecteur auxiliaire externe (51)(52), une partie du réfrigérant contenu dans ledit réservoir (6) à passer à travers le circuit hydraulique principal (10), et à s'écouler dudit premier connecteur externe (12)(14) audit connecteur auxiliaire externe (51)(52) en traversant exclusivement ledit tuyau de service externe (13)(15) de manière à éliminer exclusivement le fluide résiduel contenu dans celui-ci,
**caractérisée en ce que** le fluide résiduel dudit tuyau de service externe (13)(15) soit entraîné par le réfrigérant directement vers lesdits moyens de récupération de réfrigérant (9) sans passer à travers l'autre tuyau de service (15)(13).

6. Machine selon la revendication 5, comprenant un premier tuyau de service (13) associé à un fluide haute pression et un deuxième tuyau de service (15) associé à un fluide basse pression ; lesdits premier et deuxième tuyaux de service (13)(15) étant conçus pour relier ladite machine de recharge/récupération de réfrigérant (1) audit système de climatisation de véhicule ;
- le premier connecteur externe (12) dudit circuit hydraulique principal (10) étant relié à une première extrémité dudit premier tuyau de service externe (13) ; le circuit hydraulique principal (10) comprenant en outre un deuxième connecteur externe (14), auquel est reliée une première extrémité dudit deuxième tuyau de service externe (15) ; lesdits premier (13) et deuxième tuyaux de service (13)(15) ayant des deuxièmes extrémités libres (13b) (15b) structurées pour être couplées à des connecteurs haute pression et basse pression respectifs dudit système de climatisation de véhicule ;
ledit dispositif d'élimination de fluide résiduel (45) comprenant :
- deux connecteurs auxiliaires externes (51)(52), reliés tous deux à la fois à ladite borne d'entrée (29) desdits moyens de récupération de réfrigérant (9) ; lesdits connecteurs auxiliaires externes (51)(52) étant structurés de manière à être couplés de manière stable, mais facilement amovible aux deuxièmes extrémités libres (13b)(15b) desdits premier et deuxième tuyaux de service externes (13)(15) ; et
- lesdits moyens de commande électroniques (48) étant configurés pour commander lesdits moyens de récupération de réfrigérant (9) pour amener, lorsque lesdites deuxièmes extrémités libres (13b)(15b) desdits premier et deuxième tuyaux de service externes (13)(15) sont couplés aux connecteurs auxiliaires externes respectifs (51)(52), une partie du réfrigérant contenu dans le réservoir (6) à passer à travers le circuit hydraulique principal (10) et à être divisée en deux branches entre le premier tuyau de service (13) et le deuxième tuyau de service (15) de telle sorte que le fluide résiduel contenu dans un tuyau de service (13) (15) se trouve entraîné vers le connecteur auxiliaire externe (51)(52) correspondant sans entrer en contact avec l'autre tuyau de service (15)(13) et avec l'autre connecteur auxiliaire externe (52)(51) de manière à ne pas les contaminer.

7. Machine selon la revendication 5 ou la revendication 6, dans laquelle :
- ledit circuit hydraulique principal (10) comprend un collecteur principal (21) ; et
- lesdits moyens de récupération de réfrigérant (9) comprennent un compresseur (38) ;
ladite machine (1) comprenant :
- une première vanne tout ou rien (23)(24) agencée entre ledit au moins un premier connecteur externe (12)(14) et ledit collecteur principal (21) ; et
- une deuxième vanne tout ou rien (27) agencée entre ledit collecteur principal (21) et ledit réservoir (6) ;
lesdits moyens de commande électroniques (48) étant configurés pour :
- ouvrir ladite première vanne tout ou rien (23)(24) et ladite deuxième vanne tout ou rien (27) ; et
- mettre en marche ledit compresseur (38) pour générer une pression négative dans une région correspondant à ladite borne d'entrée (29) desdits moyens de récupération de réfrigérant (9) pour amener le réfrigérant à être expulsé dudit réservoir (6) et pour passer séquentiellement à travers ledit collecteur principal (21) et exclusivement à travers ledit tuyau de service externe (13)(15) de manière à éliminer exclusivement le fluide résiduel contenu dans celui-ci et alimenter ledit connecteur auxiliaire externe avec celui-ci (51).

8. Machine selon la revendication 7, dans laquelle :
ledit circuit hydraulique principal (10) comprend une première borne (19) reliée à ladite borne d'entrée (29) desdits moyens de récupération de réfrigérant (9) à travers une première conduite interne (30) pour alimenter le réfrigérant récupéré à partir du système de véhicule ;
- ladite machine (1) comprenant une troisième vanne tout ou rien (25) agencée entre la première borne (19) et ledit collecteur principal (21) ; et
- ledit connecteur auxiliaire (51)(52) étant relié à ladite borne d'entrée (29) à travers une deuxième conduite interne (46) ;
lesdits moyens de commande électroniques (48) étant configurés pour :
- fermer la troisième vanne tout ou rien (25) pour empêcher le transfert de fluide du collecteur principal (21) auxdits moyens de récupération de réfrigérant (9) à travers ladite première conduite interne (30) ; et
- ouvrir ladite première vanne tout ou rien (23) et ladite deuxième vanne tout ou rien (27) de telle sorte que le réfrigérant contenu dans le réservoir (6) soit aspiré par les moyens de récupération de réfrigérant (9) à travers le collecteur principal, ledit tuyau de service externe (13)(15), le connecteur auxiliaire (51) (52), et la deuxième conduite interne (46) .
